# EUROPEAN PATENT APPLICATION

(11) **EP 4 718 507 A1**
(43) Date of publication of application: **01.04.2026**
(21) Application number: 25200850.3
(22) Date of filing: 08.09.2025
(51) Int. Cl.: H01M 4/04, H01M 4/133, H01M 4/134, H01M 4/1393, H01M 4/1395, H01M 4/36, H01M 4/38, H01M 4/587, H01M 4/02

(54) **NEGATIVE ELECTRODE OF SECONDARY BATTERY, METHOD FOR MANUFACTURING THE NEGATIVE ELECTRODE, AND SECONDARY BATTERY USING THE NEGATIVE ELECTRODE**

(30) Priority: 27.09.2024 JP 2024169488
(71) Applicant: Prime Planet Energy & Solutions, Inc., Chuo-ku, Tokyo 103-0022 (JP)
(72) Inventor: ONODERA, Naoto, Tokyo, 103-0022 (JP)
(74) Representative: Kuhnen & Wacker Patent- und Rechtsanwaltsbüro PartG mbB

(57) **Abstract**

Provided is a negative electrode (60) that contains Si-containing particles (14, 18) and graphite particles (16), and causes less swelling when a secondary battery is repeatedly charged and discharged. The negative electrode of a secondary battery of the present disclosure includes a negative electrode current collector (62), and a negative electrode active material layer (64) supported by the negative electrode current collector. The negative electrode active material layer includes a first layer (64a) located on a surface layer part side, and a second layer (64b) located on a negative electrode current collector side. The first layer contains first graphite particles and first Si-containing particles (14). The second layer contains second graphite particles and second Si-containing particles (18). The content rate of Si in the first Si-containing particles is smaller than the content rate of Si in the second Si-containing particles. When a density of a molded body obtained by uniaxially pressurizing and molding 1 g of particles at 25°C and at 60 MPa into a tablet having a diameter of 20 mm is defined as a consolidation density, a consolidation density of the first Si-containing particles is 0.9 g/cm³ or more and a consolidation density of the second Si-containing particles is less than 0.9 g/cm³.

## Description

### BACKGROUND OF THE DISCLOSURE

### 1. Field

The present disclosure relates to a negative electrode of a secondary battery, and a method for manufacturing the negative electrode. The present disclosure also relates to a secondary battery using the negative electrode.

### 2. Background

In recent years, secondary batteries are suitably used for, for example, portable power sources for personal computers, portable terminals, and the like, and power sources for driving vehicles such as battery electric vehicles (BEV), hybrid electric vehicles (HEV), and plug-in hybrid electric vehicles (PREV).

In application of power sources for driving a vehicle, in particular, application of power sources for driving BEV, secondary batteries have been required to have higher capacities from the viewpoint of increasing traveling distance of vehicles. Si-containing particles are known as a negative electrode active material having high capacity. It is known that the Si-containing particles achieve higher capacity of secondary batteries (see, for example, Japanese Patent Application Laid-Open No. 2015-38862). Japanese Patent Application Laid-Open No. 2015-38862 discloses a technique using both Si-containing particles and graphite particles such as natural graphite together as the negative electrode active material.

### SUMMARY

However, Si-containing particles have high capacity but show a large change in volume due to expansion/contraction in charging and discharging a secondary battery. Then, when Si-containing particles and graphite particles are used together as negative electrode active materials, there is a problem that internal stress is increased due to swelling of the negative electrode when the secondary battery is repeatedly charged and discharged. Therefore, it is desired to develop a negative electrode containing Si-containing particles and graphite particles and causing less swelling when the secondary battery is repeatedly charged and discharged. It should be noted that the swelling of the negative electrode refers to a state in which the volume of the negative electrode becomes larger than the initial volume thereof in the same state of charge (for example, discharge state).

**In** view of the above circumstances, an object of the present disclosure is to provide a negative electrode containing Si-containing particles and graphite particles, and causing less swelling when the secondary battery is repeatedly charged and discharged.

A negative electrode of a secondary battery of the present disclosure includes a negative electrode current collector, and a negative electrode active material layer supported by the negative electrode current collector. The negative electrode active material layer includes a first layer located on a surface layer part side, and a second layer located on a negative electrode current collector side. The first layer contains first graphite particles and first Si-containing particles. The second layer contains second graphite particles and second Si-containing particles. The content rate of Si in the first Si-containing particles is smaller than the content rate of Si in the second Si-containing particles. When a density of a molded body obtained by uniaxially pressurizing and molding 1 g of particles at 25°C and at 60 MPa into a tablet having a diameter of 20 mm is defined as a consolidation density, the consolidation density of the first Si-containing particles is 0.9 g/cm³ or more, and the consolidation density of the second Si-containing particles is less than 0.9 g/cm³.

Such a configuration can provide a negative electrode containing Si-containing particles and graphite particles and causing less swelling when the secondary battery is repeatedly charged and discharged.

**In** another aspect, a method for manufacturing a secondary battery of the present disclosure includes: preparing a second layer formation paste by mixing second graphite particles and second Si-containing particles in a dispersion medium; preparing a first layer formation paste by mixing first graphite particles and first Si-containing particles in a dispersion medium; forming a second layer by applying the second layer formation paste to a negative electrode current collector and drying the applied paste; forming a first layer by applying the first layer formation paste to the second layer and drying the applied paste; and pressing the formed first layer and the formed second layer. The content rate of Si in the first Si-containing particles is smaller than the content rate of Si in the second Si-containing particles. When a density of a molded body obtained by uniaxially pressurizing and molding 1 g of particles at 25°C and at 60 MPa into a tablet having a diameter of 20 mm is defined as a consolidation density, the consolidation density of the first Si-containing particles is 0.9 g/cm³ or more, and the consolidation density of the second Si-containing particles is less than 0.9 g/cm³.

The negative electrode obtained by such a configuration can suppress swelling of the negative electrode when the secondary battery is repeatedly charged and discharged.

In a further aspect, the secondary battery disclosed herein includes a positive electrode, a negative electrode, and an electrolyte. This negative electrode is the negative electrode described above.

Such a configuration can provide a secondary battery which uses a negative electrode containing Si-containing particles and graphite particles, and in which the negative electrode less swells when the secondary battery is repeatedly charged and discharged.

### BRIEF DESCRIPTION OF THE DRAWINGS

FIG. 1 is a sectional view schematically showing a configuration of a negative electrode of a secondary battery according to one embodiment of the present disclosure;
FIG. 2 is a sectional view schematically showing a configuration of particles of a negative electrode active material included in a negative electrode active material layer of the negative electrode of FIG. 1;
FIG. 3 is a sectional view schematically showing a configuration of a lithium ion secondary battery constructed using a negative electrode of a secondary battery according to one embodiment of the present disclosure; and
FIG. 4 is a schematic disassembled view showing a configuration of a wound electrode body of the lithium ion secondary battery of FIG. 3.

### DETAILED DESCRIPTION OF THE EMBODIMENTS

Hereinafter, embodiments according to the present disclosure will be described with reference to the drawings. Matters not specifically mentioned in this specification but required for carrying out the present disclosure can be understood as matters of design of a person skilled in the art based on the related art in the field. The present disclosure can be carried out on the basis of the contents disclosed in this specification and the common general technical knowledge in the field. Moreover, in the drawings below, members and parts having the same effect will be given the same reference numerals. The dimensional relationships (length, width, thickness, and the like) in each drawing do not reflect the actual dimensional relationships. It should be noted that in this specification, A and B are included in the numerical range expressed as "A to B".

It should be noted that a "secondary battery" in this specification refers to an electricity storage device capable of being repeatedly charged and discharged. Furthermore, a "lithium ion secondary battery" in this specification refers to a secondary battery that uses lithium ions as charge carriers and that can be charged and discharged by movement of electric charges accompanying lithium ions between positive and negative electrodes.

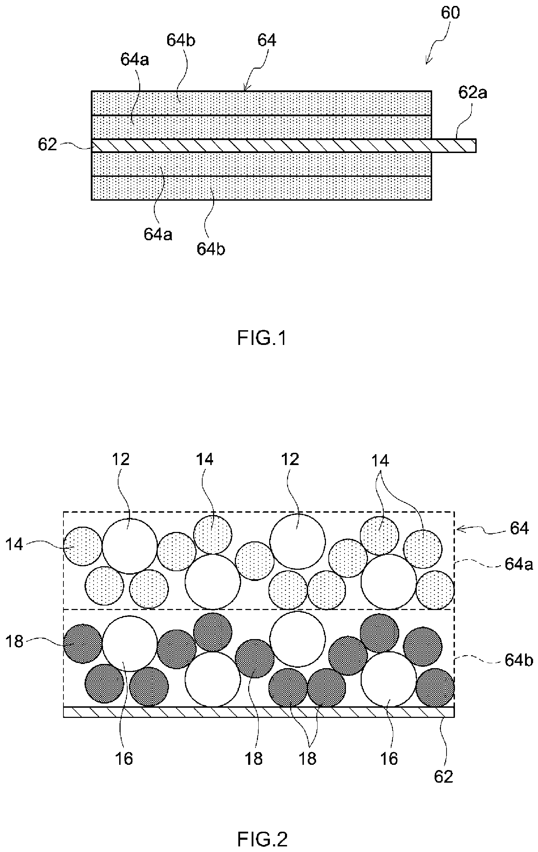

A negative electrode disclosed herein is used for a secondary battery, and suitably used for a lithium ion secondary battery. One embodiment of a negative electrode disclosed herein is specifically described with reference to FIG. 1. FIG. 1 is a sectional view schematically showing a negative electrode 60 of an example according to this embodiment, and the sectional view is along a thickness direction and a width direction. The negative electrode 60 according to this embodiment shown in FIG. 1 is a negative electrode of a lithium ion secondary battery.

As shown in the drawing, the negative electrode 60 includes a negative electrode current collector 62, and a negative electrode active material layer 64 supported by the negative electrode current collector 62. In other words, the negative electrode 60 includes the negative electrode current collector 62, and the negative electrode active material layer 64 provided on the negative electrode current collector 62. The negative electrode active material layer 64 may be provided only on one surface of the negative electrode current collector 62 or may be provided on both surfaces of the negative electrode current collector 62 as shown in the drawing. The negative electrode active material layer 64 is desirably provided on both surfaces of the negative electrode current collector 62.

As shown in the drawing, a negative electrode active material layer non-formed portion 62a that is not provided with the negative electrode active material layer 64 may be provided at one end in the width direction of the negative electrode 60. In the negative electrode active material layer non-formed portion 62a, the negative electrode current collector 62 is exposed so that the negative electrode active material layer non-formed portion 62a can function as a current collecting part. However, the configuration for collecting current from the negative electrode 60 is not limited to this.

The negative electrode current collector 62 has a foil shape (or a sheet shape) in the example shown in the drawing, but is not limited to this shape. The negative electrode current collector 62 may have various forms such as a rod shape, a plate shape, or a mesh shape. The material for the negative electrode current collector 62 can be a highly conductive metal (for example, copper, nickel, titanium, and stainless steel) in a manner the same as or similar to a conventional lithium ion secondary battery, and among them, copper is desirable. As the negative electrode current collector 62, copper foil is particularly desirable.

Dimensions of the negative electrode current collector 62 are not particularly limited, and may be appropriately determined depending on battery design. When copper foil is used as the negative electrode current collector 62, the thickness of the foil is not particularly limited, and is, for example, 5 µm or more and 35 µm or less, and desirably 6 µm or more and 20 µm or less.

As shown in FIG. 1, the negative electrode active material layer 64 has a multi-layer structure, and specifically includes a first layer 64a located on a surface layer side of the negative electrode active material layer 64, and a second layer 64b located on a negative electrode current collector 62 side. As shown in FIG. 1, the first layer 64a is an upper layer of the negative electrode active material layer 64, and the second layer 64b is a lower layer of the negative electrode active material layer 64. It should be noted that the negative electrode active material layer 64 may further include a layer other than the first layer 64a and the second layer 64b as long as the advantageous effects of the present invention are not significantly impaired. For example, the negative electrode active material layer 64 may include an intermediate layer, between the first layer 64a and the second layer 64b, in which components of the first layer 64a and the second layer 64b are mixed.

The negative electrode active material layer 64 contains a negative electrode active material. This is described in detail with reference to FIG. 2. FIG. 2 is a schematic sectional view showing particles of the negative electrode active material included in the negative electrode active material layer 64 shown in FIG. 1. It should be noted that FIG. 2 is a schematic view, and therefore the number, distribution, and the like, of particles, are not limited to those shown in FIG. 2.

For the negative electrode active material, the first layer 64a contains the first graphite particles 12 and the first Si-containing particles 14. The second layer 64b contains the second graphite particles 16 and the second Si-containing particles 18. Therefore, for the first layer 64a, at least the first graphite particles 12 and the first Si-containing particles 14 are used as the negative electrode active material, and for the second layer 64b, at least the second graphite particles 16 and the second Si-containing particles 18 are used as the negative electrode active material. The Si-containing particles undergo a large change in volume due to expansion/contraction accompanying charge and discharge, but when graphite particles are used together, breakage of a conductive path caused by change in volume of the Si-containing particles can be suppressed.

Graphite constituting the first graphite particles 12 and the second graphite particles 16 may be natural graphite or artificial graphite, and may be amorphous carbon-coated graphite in which graphite is coated with an amorphous carbon material.

The shapes of the first graphite particles 12 and the second graphite particles 16 are not particularly limited, and may be a scaly shape, a spherical shape, or the like. The first graphite particles 12 and the second graphite particles 16 are desirably spheroidized graphite particles. When the first graphite particles 12 and the second graphite particles 16 are spherical, the circularity of the first graphite particles 12 and the second graphite particles 16 is desirably 0.85 to 1, more desirably 0.88 to 1, and further desirably 0.90 to 1.

It should be noted that the "circularity" in this specification refers to a ratio of a circumference of a complete circle having the same area as a projected area of particle to a circumference of a projected image of the particle (i.e., circularity = circumference of complete circle having the same area as projected area of particle / circumference of projected image of particle). Accordingly, as the circularity is closer to 1, the particle projected image is closer to a complete circle, and the particle approaches a complete sphere. The circularity can be obtained by, for example, obtaining circularities of 100 or more particles using a commercially available static automated image analyzer and calculating an average of the obtained circularities.

The average particle diameter (D50) of the first graphite particles 12 and the average particle diameter (D50) of the second graphite particles 16 are not particularly limited. The average particle diameter (D50) of the first graphite particles 12 and the average particle diameter (D50) of the second graphite particles 16 are respectively, for example, 1 µm to 30 µm, desirably 5 µm to 25 µm, more desirably 10 µm to 23 µm, and further desirably 12 µm to 20 µm.

It should be noted that the "average particle diameter (D50)" in this specification refers to a median diameter (D50), and refers to a particle diameter corresponding to 50% by volume of a cumulative frequency from the small-diameter particle side in volume-based particle size distribution based on a laser diffraction and scattering method. The average particle diameter (D50) can be obtained by using, for example, a commercially available laser diffraction and scattering type particle size distribution measurement device.

In a case of uniaxially pressurizing and molding 1 g of the first particles 12 into a tablet having a diameter of 20 mm, a molding pressure when a density of a molded body is 1.7 g/cm³ is desirably 20 MPa or less, and more desirably 10 MPa to 18 MPa. In a case of uniaxially pressurizing and molding 1 g of the second particles 16 into a tablet having a diameter of 20 mm, a molding pressure when a density of a molded body is 1.7 g/cm³ is desirably 20 MPa or less, and more desirably 10 MPa to 18 MPa. The molding pressure can be easily measured using an automatic powder resistance measurement system (for example, "MCP-PD600" manufactured by Nittoseiko Analytech Co., Ltd.) and a 20-mm diameter probe (corresponding to a mold).

As the first graphite particles 12 and the second graphite particles 16, the same graphite particles may be used, or different graphite particles may be used. As the first graphite particles 12 and the second graphite particles 16, the same graphite particles are desirably used.

As the first Si-containing particles 14 and the second Si-containing particles 18, for example, particles of a Si-C composite material can be used. The Si-C composite material typically includes a carbon domain and a Si-containing domain. It should be noted that the first Si-containing particles 14 and the second Si-containing particles 18 may not be a Si-C composite material and may be Si particles, Si oxide particles, and the like.

Examples of the carbon domain include: a carbonized material of a carbon precursor (for example, petroleum pitch, coal pitch, and phenolic resin); graphite; and the like. The carbon domain suitably constitutes a carbon matrix. Thus, the Si-C composite material is suitably a material in which a plurality of Si-containing domains is dispersed in a carbon matrix. This case is advantageous because the carbon matrix can reduce a change in volume due to expansion/contraction of the Si-containing domains.

The Si-containing domain includes Si, and is constituted by, for example, Si, Si oxide (SiOₓ), Si nitride (SiNₓ), Si carbide (SiCₓ), and the like. The Si-containing domain is desirably constituted by at least one of Si or Si oxide (SiOₓ). The Si-containing domain may be fine particles. The content of oxygen in the Si-containing domain is desirably 10% by mass or less.

The average particle diameter of the Si-containing domain is, for example, 50 nm or less and may be 5 nm to 50 nm. It should be noted that the "average particle diameter of Si-containing domain" can be obtained as follows. Firstly, the negative electrode active material layer 64 is subjected to a FIB (focused ion beam) processing to produce a sample for scanning transmission electron microscopic (STEM) observation. The sample is subjected to an element analysis by EDX element mapping, and then a BF image (bright field image) and a HAADF image (high-angle annular dark field image) are acquired. From contrasts and shapes obtained from the BF image and the HAADF image, diameters of the Si-containing domain can be obtained. Diameters of arbitrarily selected 10 or more Si-containing domains are obtained, and an average value of the diameters is defined herein as an "average particle diameter of the Si-containing domains".

The Si-C composite material may be, for example, a material in which fine particles including Si are dispersed inside carbon material; a material in which fine particles including Si enter voids of granulated porous graphite; and the like. The Si-C composite material may be a material in which fine particles including Si are attached to a surface of a carbon particle; a material in which carbon fine particles are attached to a surface of a particle including Si; and the like. From the viewpoint of suppressing the change in volume of Si, a material in which Si nanoparticles are dispersed inside the carbon material, and a material in which Si nanoparticles are dispersed in voids of the porous carbon materials are desirable, and a material in which Si nanoparticles are dispersed in voids of the porous carbon materials is more desirable.

In this embodiment, the content rate of Si (S1) in the first Si-containing particles 14 is smaller than the content rate of Si (S2) in the second Si-containing particles 18. The content rate of Si (S1) in the first Si-containing particles 14 and the content rate of Si (S2) in the second Si-containing particles 18 are not particularly limited as long as this relationship is satisfied. However, when these content rates of Si are too low, the effect of suppressing swelling of the negative electrode may become small when the secondary battery is repeatedly charged and discharged. On the other hand, when these content rates of Si are too high, a change in volume due to expansion/contraction of the first Si-containing particles 14 and the second Si-containing particles 18 may become too large when the secondary battery is repeatedly charged and discharged.

Therefore, the content rate of Si (S1) in the first Si-containing particles 14 is desirably 20% by mass to 55% by mass, and more desirably 25% by mass to 45% by mass. The content rate of Si (S2) in the second Si-containing particles 18 is desirably 45% by mass to 80% by mass, and more desirably 55% by mass to 75% by mass.

Furthermore, a ratio (S1/S2) of the content rate of Si (S1) in the first Si-containing particles 14 to the content rate of Si (S2) in the second Si-containing particles 18 is desirably 0.10 to 0.90, more desirably 0.20 to 0.80, and further desirably 0.40 to 0.75.

Herein, the density of a molded body obtained by uniaxially pressurizing and molding 1 g of particles at 25°C and at 60 MPa into a tablet having a diameter of 20 mm is defined as a consolidation density. This consolidation density is an index of filling property of particles. The higher the consolidation density of particles is, the higher the filling property of particles becomes. The consolidation density of the first Si-containing particles 14 is 0.90 g/cm³ or more. On the other hand, the consolidation density of the second Si-containing particles 18 is less than 0.90 g/cm³.

In this way, in the first layer 64a that is an upper layer of the negative electrode active material layer 64, in addition to the first graphite particles 12, the first Si-containing particles 14 having a low content rate of Si and a high consolidation density are used, and in the second layer 64b that is a lower layer of the negative electrode active material layer 64, in addition to the second graphite particles 16, the second Si-containing particles 18 having a high content rate of Si and a low consolidation density are used. In particular, the consolidation density of the conventionally used Si-containing particles is usually less than 0.90/cm³. Therefore, the first Si-containing particles 14 have a higher consolidation density than that of conventionally used Si-containing particles. This can significantly suppress swelling of the negative electrode 60 when the secondary battery is repeatedly charged and discharged. The reason thereof is thought to be as follows.

In other words, in the negative electrode active material layer 64, it is in the upper layer (that is, the first layer 64a) that swelling is large when the secondary battery is repeatedly charged and discharged. Accordingly, for the upper layer, the first Si-containing particles 14 having a low content rate of Si and a high consolidation density, that is, Si-containing particles having small expansion/contraction and high filling property are used. This makes it easy for the particles to move in the upper layer part, and the particles follow the expansion/contraction caused by charge and discharge to reduce the stress, thereby suppressing the swelling of the negative electrode.

On the other hand, in the lower layer part, the second Si-containing particles 18 having a high content rate of Si and a low consolidation density, that is, Si-containing particles having large expansion/contraction and low filling property are used. This makes it difficult for particles to move in the lower layer part, thereby suppressing the breakage of a conductive path during charging and discharging. Accordingly, it is possible to suppress swelling of the negative electrode (swelling due to uneven battery reaction and local concentration of reaction and stress, and the like) caused by the breakage of the conductive path. As a result, in the entire negative electrode active material layer 64, swelling of the negative electrode 60 when the secondary battery is repeatedly charged and discharged can be significantly suppressed.

The consolidation density of the first Si-containing particles 14 is desirably 0.95 g/cm³ or more, more desirably 1.00 g/cm³ or more, further desirably 1.1 g/cm³ or more, and particularly desirably 1.2 g/cm³ or more. On the other hand, the consolidation density of the first Si-containing particles 14 may be 2.3 g/cm³ or less, 2.0 g/cm³ or less, 1.8 g/cm³ or less, or 1.5 g/cm³ or less.

The consolidation density of the second Si-containing particles 18 is desirably 0.88 g/cm³ or less, more desirably 0.86 g/cm³ or less, and further desirably 0.85 g/cm³ or less. On the other hand, the consolidation density of the second Si-containing particles 18 is desirably 0.50 g/cm³ or more, more desirably 0.65 g/cm³ or more, further desirably 0.75 g/cm³ or more, and particularly desirably 0.83 g/cm³ or more.

It should be noted that the consolidation density can be easily measured by using, for example, an automatic powder resistance measurement system (for example, "MCP-PD600" manufactured by Nittoseiko Analytech Co., Ltd.) and a 20-mm diameter probe (corresponding to a mold).

It should be noted that the consolidation density is affected by the circularity of the Si-containing particle. When the circularity of the Si-containing particle is increased, the consolidation density tends to become large. Therefore, when the circularity of the Si-containing particle is 0.85 to 1 (in particular, 0.90 to 1), the consolidation density tends to be 0.90 g/cm³ or more. On the other hand, when the circularity of Si-containing particle is less than 0.85, the consolidation density tends to be less than 0.90 g/cm³.

Furthermore, the particle diameter of the Si-containing particle also affects the consolidation density. Therefore, since the consolidation density is easily adjusted to 0.90 g/cm³ or more, the average particle diameter (D50) of the first Si-containing particles 14 is desirably 2 µm to 10 µm, more desirably 5 µm to 10 µm. Furthermore, since the consolidation density is easily adjusted to less than 0.90 g/cm³, the average particle diameter (D50) of the second Si-containing particles 18 is desirably 2 µm to 10 µm, more desirably 5 µm to 10 µm, and further desirably 6 µm to 9 µm.

The true density of the Si-containing particle also affects the consolidation density. Therefore, by adjusting compositions of the first Si-containing particles 14 and the second Si-containing particles 18 (the content rate of the constituting element), the consolidation density can be fine-adjusted.

The ratio of the average particle diameter (D50) of the first graphite particles 12 to the average particle diameter (D50) of the first Si-containing particles 14 (D50 of the first graphite particles 12 / D50 of the first Si-containing particles 14) is not particularly limited. From the viewpoint of a particularly high filling property, the ratio (D50 of the first graphite particles 12 / D50 of the first Si-containing particles 14) is desirably 1.0 to 8.0, more desirably 1.0 to 5.0, further desirably 1.2 to 3.0, and particularly desirably 1.4 to 2.5.

The ratio of the average particle diameter (D50) of the second graphite particles 16 to the average particle diameter (D50) of the second Si-containing particles 18 (D50 of the second graphite particles 16 / D50 of the second Si-containing particles 18) is not particularly limited. From the viewpoint of a particularly high filling property, the ratio (D50 of the second graphite particles 16 / D50 of the second Si-containing particles 18) is desirably 1.0 to 8.0, more desirably 1.0 to 5.0, further desirably 1.2 to 3.0, and particularly desirably 1.4 to 2.5.

It should be noted that the first Si-containing particles 14 and the second Si-containing particles 18 can be produced according to a publicly known method. It should be noted that various methods for manufacturing particles of the Si-C composite material are publicly known (see, for example, Japanese Unexamined Patent Application Publication No. 2015-38862, International Patent Publication No. 2014/046144, and prior art documents listed in this International Patent Publication).

In the first layer 64a, the mass percentage of the first Si-containing particles 14 with respect to the total of the first graphite particles 12 and the first Si-containing particles 14 is desirably 10% by mass to 60% by mass, more desirably 15% by mass to 50% by mass, and further desirably 20% by mass to 40% by mass.

In the second layer 64b, the mass percentage of the second Si-containing particles 18 with respect to the total of the second graphite particles 16 and the second Si-containing particles 18 is desirably 10% by mass to 60% by mass, more desirably 15% by mass to 50% by mass, and further desirably 20% by mass to 40% by mass. It should be noted that the mass percentage of the first Si-containing particles 14 in the first layer 64a and the mass percentage of the second Si-containing particles 18 in the second layer 64b may be the same as each other or may be different from each other.

The negative electrode active material included in the first layer 64a may be only the first graphite particles 12 and the first Si-containing particles 14. However, the first layer 64a may further contain negative electrode active material other than the first graphite particles 12 and the first Si-containing particles 14 in a range in which the effects of the present invention is not impaired (for example, 10% by mass or less of the total amount of the negative electrode active material included in the first layer 64a).

The negative electrode active material included in the second layer 64b may be only the second graphite particles 16 and the second Si-containing particles 18. However, the second layer 64b may further contain negative electrode active material other than the second graphite particles 16 and the second Si-containing particles 18 in a range in which the effects of the present invention is not impaired (for example, 10% by mass or less of the total amount of the negative electrode active material included in the second layer 64b).

In the negative electrode active material layer 64, the ratio (T2/T1) of a thickness (T2) of the second layer 64b to a thickness (T1) of the first layer 64a is not particularly limited as long as the effects of the present invention can be obtained, and it is, for example, 5/95 to 95/5. From the viewpoint of suppressing the swelling of the negative electrode more when the secondary battery is repeatedly charged and discharged, the ratio (T2/T1) is desirably 10/90 to 90/10, more desirably 20/80 to 90/10, and further desirably 40/60 to 70/30.

The negative electrode active material layer 64 may contain components other than the negative electrode active material, and examples of the components include a binder, a conductive material, and the like. Examples of the binder used include styrene-butadiene rubber (SBR), carboxymethyl cellulose (CMC), polyacrylic acid (PAA), polyvinylidene fluoride (PVdF), and the like. CMC also functions as a thickener. Examples of the conductive material include carbon black such as acetylene black, carbon fibers, carbon nanotubes (CNT), and the like. Among these, CNT is desirable. When CNT is used as the conductive material, the negative electrode active material layer 64 may contain a dispersing agent of CNT.

The content of the negative electrode active material in the first layer 64a (that is, with respect to the total mass of the first layer 64a) is desirably 90% by mass or more, and more desirably 95% by mass or more. The content of the binder in the first layer 64a is desirably 0.1% by mass or more and 8% by mass or less, and more desirably 0.5% by mass or more and 5% by mass or less. The content of the conductive material in the first layer 64a is desirably 0.01% by mass or more and 3% by mass or less, and more desirably 0.05% by mass or more and 1% by mass or less.

The content of the negative electrode active material in the second layer 64b (that is, with respect to the total mass of the second layer 64b) is desirably 90% by mass or more, and more desirably 95% by mass or more. The content of the binder in the second layer 64b is desirably 0.1% by mass or more and 8% by mass or less, and more desirably 0.5% by mass or more and 5% by mass or less. The content of the conductive material in the second layer 64b is desirably 0.01% by mass or more and 3% by mass or less, and more desirably 0.05% by mass or more and 1% by mass or less.

The thickness of the negative electrode active material layer 64 is not particularly limited, and is, for example, 10 µm or more and 400 µm or less, and desirably 20 µm or more and 300 µm or less.

The density of the negative electrode active material layer 64 is not particularly limited, and is, for example, 0.7 g/cm³ or more, desirably 1.0 g/cm³ or more, and more desirably 1.2 g/cm³ or more. On the other hand, the density of the negative electrode active material layer 64 is, for example, 2.3 g/cm³ or less, and may be 2.0 g/cm³ or less.

The negative electrode 60 may include a member other than the negative electrode current collector 62 and the negative electrode active material layer 64. For example, an insulating layer (not shown) adjacent to the negative electrode active material layer 64 may be provided on the negative electrode active material layer non-formed portion 62a. The insulating layer contains, for example, insulating inorganic fillers.

The negative electrode 60 can be suitably manufactured by, for example, a manufacturing method including steps of preparing a second layer formation paste by mixing the second graphite particles 16 and the second Si-containing particles 18 in a dispersion medium (hereinafter, also referred to as a "lower layer formation paste preparation step"); preparing a first layer formation paste by mixing the first graphite particles 12 and the first Si-containing particles 14 in a dispersion medium (hereinafter, also referred to as an "upper layer formation paste preparation step"); forming the second layer 64b (lower layer) by applying the second layer formation paste onto the negative electrode current collector 62 and drying the applied paste (hereinafter, also referred to as "lower layer formation step"); forming the first layer 64a (upper layer) by applying the first layer formation paste onto the second layer 64b and drying the applied paste (hereinafter, also referred to as "upper layer formation step"); and pressing the first layer 64a and the second layer 64b formed above (hereinafter, also referred to as "pressing step"). In the manufacturing method, the content rate of Si (S1) in the first Si-containing particles 14 is smaller than the content rate of Si (S2) in the second Si-containing particles 18. The above-described consolidation density of the first Si-containing particles 14 is 0.9 g/cm³ or more, and the above-described consolidation density of the second Si-containing particles 18 is less than 0.9 g/cm³.

It should be noted that the "paste" in this specification refers to a mixture in which a solid content is partially or entirely dispersed in a dispersion medium, and encompasses so-called "slurry," "ink," and the like.

The lower layer formation paste preparation step can be carried out according to a publicly known method by mixing the second graphite particles 16, the second Si-containing particles 18, and optional components (for example, a binder, a conductive material, and the like) with a dispersion medium (for example, water) using a publicly known mixer, stirrer, or the like.

The upper layer formation paste preparation step can be carried out according to a publicly known method by mixing the first graphite particles 12, the first Si-containing particles 14, and optional components (for example, a binder, a conductive material, and the like) with a dispersion medium (for example, water) using a publicly known mixer, a stirrer, or the like. It should be noted that the upper layer formation paste preparation step may be carried out concurrently with the lower layer formation paste preparation step. The upper layer formation paste preparation step may be carried out concurrently with or after the lower layer formation step.

The lower layer formation step can be carried out according to a publicly known method. Specifically, for example, the lower layer formation paste is applied onto the negative electrode current collector 62 using a publicly known applying device, followed by drying. By the drying, the lower layer (second layer 64b) is formed.

The upper layer formation step can be carried out according to a publicly known method. Specifically, for example, the upper layer formation paste is applied onto the formed lower layer using a publicly known applying device, followed by drying. By the drying, the upper layer (first layer 64a) is formed, and the negative electrode active material layer 64 is formed.

The pressing step can be carried out according to a publicly known method. Specifically, a pressure is applied to the upper layer and the lower layer formed above (that is, the negative electrode active material layer 64) using, for example, a roller press, thereby carrying out the pressing step. Through the pressing step, the negative electrode active material layer 64 can be compressed to a predetermined density, and thereby, negative electrode active material particles are filled densely.

The negative electrode 60 according to this embodiment can suppress swelling of the negative electrode 60 when the secondary battery is repeatedly charged and discharged. Furthermore, since the negative electrode 60 according to this embodiment uses the negative electrode active material containing Si, the capacity of the secondary battery can be increased.

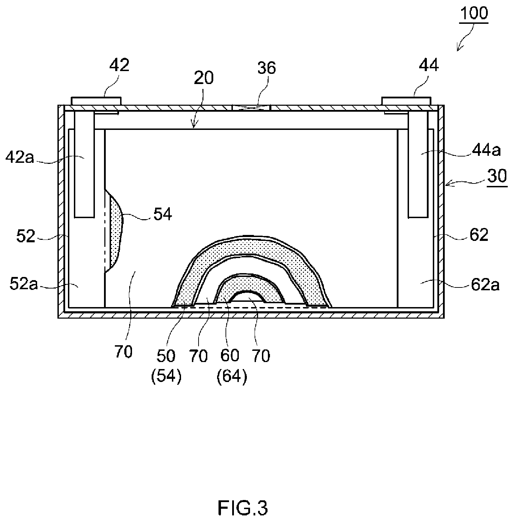

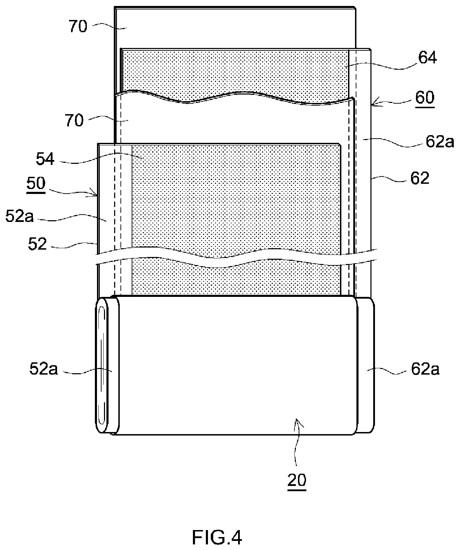

Then, in another aspect, the secondary battery disclosed herein includes a positive electrode, a negative electrode, and an electrolyte. The negative electrode is the negative electrode 60 according to the embodiment described above. An embodiment of the secondary battery disclosed herein will be described below using a lithium ion secondary battery as an example with reference to FIGs. 3 and 4. The following configuration example is a flat rectangular lithium ion secondary battery including a flat wound electrode body and a flat battery case.

A lithium ion secondary battery 100 shown in FIG. 3 is a sealed lithium ion secondary battery 100 constructed by housing a flat wound electrode body 20 and a nonaqueous electrolyte (not shown) in a flat rectangular battery case (that is, an outer container) 30. The battery case 30 is provided with a positive electrode terminal 42 and a negative electrode terminal 44 for external connection, and a thin safety valve 36 set to release an internal pressure when the internal pressure of the battery case 30 increases to a predetermined level or more. The battery case 30 is provided with an injection port (not shown) for injecting the nonaqueous electrolyte. The positive electrode terminal 42 is electrically connected to a positive electrode current collector plate 42a. The negative electrode terminal 44 is electrically connected to a negative electrode current collector plate 44a. A material for the battery case 30 is, for example, a metal material such as aluminum that is lightweight and has high thermal conductivity.

As shown in FIGs. 3 and 4, the wound electrode body 20 has a form in which a positive electrode sheet 50 and a negative electrode sheet 60 are stacked with two long separator sheets 70 interposed therebetween and wound in the longitudinal direction. The positive electrode sheet 50 has a configuration in which a positive electrode active material layer 54 is formed on one surface or both surfaces (herein, both surfaces) of a long positive electrode current collector 52 along the longitudinal direction. The negative electrode sheet 60 has a configuration in which a negative electrode active material layer 64 is formed on one surface or both surfaces (herein, both surfaces) of a long negative electrode current collector 62 along the longitudinal direction. A positive electrode active material layer non-formed portion 52a (that is, a portion where no positive electrode active material layer 54 is formed and the positive electrode current collector 52 is exposed) and a negative electrode active material layer non-formed portion 62a (that is, a portion where no negative electrode active material layer 64 is formed and the negative electrode current collector 62 is exposed) are formed to extend off outward from both ends of the wound electrode body 20 in the winding axis direction (that is, the sheet width direction orthogonal to the above longitudinal direction). The positive electrode current collector plate 42a and the negative electrode current collector plate 44a are respectively joined to the positive electrode active material layer non-formed portion 52a and the negative electrode active material layer non-formed portion 62a.

The positive electrode current collector 52 constituting the positive electrode sheet 50 may be a publicly known positive electrode current collector used in a lithium ion secondary battery, and examples of the positive electrode current collector 52 include sheets or foil made of highly conductive metals (for example, aluminum, nickel, titanium, and stainless steel, and the like). The positive electrode current collector 52 is desirably aluminum foil.

Dimensions of the positive electrode current collector 52 are not particularly limited, and may be appropriately determined depending on battery design. When aluminum foil is used as the positive electrode current collector 52, the thickness thereof is not particularly limited, and is, for example, 5 µm or more and 35 µm or less, and desirably 7 µm or more and 20 µm or less.

The positive electrode active material layer 54 contains a positive electrode active material. The positive electrode active material may be a positive electrode active material having a publicly known composition to be used in a lithium ion secondary battery. Specifically, for example, as the positive electrode active material, a lithium composite oxide, a lithium transition metal phosphate compound, and the like, may be used. The crystal structure of the positive electrode active material is not particularly limited, and may be a layered structure, a spinel structure, an olivine structure, or the like.

The lithium composite oxide is desirably a lithium transition metal composite oxide including at least one of Ni, Co, and Mn as a transition metal element, and specific examples of the lithium transition metal composite oxide include a lithium nickel composite oxide, a lithium cobalt composite oxide, a lithium manganese composite oxide, a lithium nickel manganese composite oxide, a lithium nickel cobalt manganese composite oxide, a lithium nickel cobalt aluminum composite oxide, a lithium iron nickel manganese composite oxide, and the like.

It should be noted that the "lithium nickel cobalt manganese composite oxide" in this specification includes not only oxides including Li, Ni, Co, Mn, and O as constituent elements, but also an oxide further including one or more additive elements other than the above constituent elements besides them. Examples of the additive elements include transition metal elements, typical metal elements, and the like such as Mg, Ca, Al, Ti, V, Cr, Y, Zr, Nb, Mo, Hf, Ta, W, Na, Fe, Zn, and Sn. Furthermore, the additive element may be a metalloid element such as B, C, Si, and P, and a nonmetal element such as S, F, Cl, Br, and I. The same is applied to the lithium nickel composite oxide, the lithium cobalt composite oxide, the lithium manganese composite oxide, the lithium nickel manganese composite oxide, the lithium nickel cobalt aluminum composite oxide, the lithium iron nickel manganese composite oxide, and the like described above.

Examples of the lithium transition metal phosphate compound include lithium iron phosphate (LiFePO₄), lithium manganese phosphate (LiMnPO₄), lithium manganese iron phosphate, and the like.

These positive electrode active materials may be used alone or in combination of two or more types thereof. The positive electrode active material is particularly desirably the lithium nickel cobalt manganese composite oxide because of excellent characteristics such as initial resistance characteristic.

An average particle diameter (D50) of the positive electrode active material is not particularly limited, and is, for example, 0.05 µm or more and 25 µm or less, desirably 1 µm or more and 20 µm or less, and more desirably 3 µm or more and 15 µm or less.

The positive electrode active material layer 54 may include components other than the positive electrode active material, for example, trilithium phosphate, a conductive material, a binder, and the like. Suitable examples of the conductive material include: carbon black such as acetylene black (AB); carbon fibers such as vapor grown carbon fibers (VGCF) and carbon nanotubes (CNT); and other carbon materials (for example, graphite). Examples of the binder include polyvinylidene fluoride (PVdF) and the like.

The content of the positive electrode active material in the positive electrode active material layer 54 (that is, the content of the positive electrode active material with respect to the total mass of the positive electrode active material layer 54) is not particularly limited, and is desirably 70% by mass or more, more desirably 80% by mass or more, and further more desirably 85% by mass or more and 99% by mass or less. The content of trilithium phosphate in the positive electrode active material layer 54 is not particularly limited, and is desirably 0.1% by mass or more and 15% by mass or less, and more desirably 0.2% by mass or more and 10% by mass or less. The content of the conductive material in the positive electrode active material layer 54 is not particularly limited, and is desirably 0.1% by mass or more and 20% by mass or less, and more desirably 0.3% by mass or more and 15% by mass or less. The content of the binder in the positive electrode active material layer 54 is not particularly limited, and is desirably 0.4% by mass or more and 15% by mass or less, and more desirably 0.5% by mass or more and 10% by mass or less.

The thickness the positive electrode active material layer 54 per one surface of the positive electrode current collector 52 is not particularly limited, and is usually 10 µm or more, and desirably 20 µm or more. On the other hand, this thickness is usually 400 µm or less, and desirably 300 µm or less.

As the negative electrode sheet 60, the above-mentioned negative electrode 60 is used.

Examples of a separator 70 include a porous sheet (film) of a resin such as polyethylene (PE), polypropylene (PP), polyester, cellulose, or polyamide. The porous sheet may have a single-layer structure or a laminated structure of two or more layers (for example, three-layer structure in which PP layers are stacked on each surface of a PE layer). A heat-resistance layer (HRL) may be provided on a surface of the separator 70.

The thickness of the separator 70 is not particularly limited, and is, for example, 5 µm or more and 50 µm or less, desirably 10 µm or more and 30 µm or less. An air permeability of the separators 70 obtained by a Gurley permeability test is not particularly limited, and is desirably 350 seconds/100 cc or less.

The nonaqueous electrolyte typically contains a nonaqueous solvent and a supporting salt (electrolyte salt). As the nonaqueous solvent, organic solvents such as carbonates, ethers, esters, nitriles, sulfones, and lactones to be used in an electrolytic solution of a typical lithium ion secondary battery can be used without any particular limitation. Among these, carbonates are desirable, and specific examples thereof include ethylene carbonate (EC), propylene carbonate (PC), diethyl carbonate (DEC), dimethyl carbonate (DMC), ethyl methyl carbonate (EMC), monofluoroethylene carbonate (FEC), difluoroethylene carbonate (DFEC), monofluoromethyl difluoromethyl carbonate (F-DMC), trifluorodimethyl carbonate (TFDMC), and the like. Such nonaqueous solvents may be used alone or in combination of two or more thereof appropriately. As an example, the nonaqueous solvent consists of carbonates. As another example, the nonaqueous solvent contains carbonates and esters such as methyl acetate.

Suitable examples of the supporting salt include lithium salts (desirably LiPF₆) such as LiPF₆, LiBF₄, and lithium bis(fluorosulfonyl)imide (LiFSI). The concentration of the supporting salt is desirably 0.7 mol/L or more and 1.3 mol/L or less.

It should be noted that the nonaqueous electrolytic solution above may include components other than the components described above, for example, various additives including a coating film formation agent such as vinylene carbonate (VC) and an oxalato complex; a gas generating agent such as biphenyl (BP) or cyclohexylbenzene (CHB); and a thickener, as long as the effects of the present disclosure are not significantly impaired.

**In** the lithium ion secondary battery 100, swelling of the negative electrode during repetitive charge and discharge is suppressed, and reaction force is low. Furthermore, the lithium ion secondary battery 100 has high capacity. The lithium ion secondary battery 100 is applicable to various applications. Examples of suitable applications include drive power sources to be mounted on vehicles such as battery electric vehicles (BEV), hybrid electric vehicles (HEV), and plug-in hybrid electric vehicles (PHEV). Furthermore, the lithium ion secondary battery 100 can be used as a storage battery for, for example, a small-size power storage device. The lithium ion secondary battery 100 can also be used in a form of a battery module in which typically a plurality of batteries is connected in series and/or in parallel.

In the above, the rectangular lithium ion secondary battery 100 including the flat-shaped wound electrode body 20 as an example is described. However, the lithium ion secondary battery can also be configured as a lithium ion secondary battery including a stacked-type electrode body (that is, an electrode body in which a plurality of positive electrodes and a plurality of negative electrodes are alternately stacked). Furthermore, the lithium ion secondary battery can also be configured as a cylindrical lithium ion secondary battery, a laminated-case lithium ion secondary battery, or the like.

Furthermore, according to a publicly known method, the lithium ion secondary battery 100 can also be configured as an all-solid-state lithium ion secondary battery using a solid-state electrolyte instead of the nonaqueous electrolyte.

Furthermore, the negative electrode 60 according to this embodiment is suitable as a negative electrode of a lithium ion secondary battery, and can also be constructed and used for negative electrodes of other secondary batteries. These other secondary batteries can be configured according to a publicly known method.

Hereinafter, Examples of the present disclosure will be described in detail, but the present disclosure is not intended to be limited to these Examples.

### <Production of Negative Electrode>

### [Example 1]

As negative electrode active materials, following materials were prepared.

First Si-containing particles: Si-C composite material, content rate of Si = 35% by mass, average particle diameter (D50) = 6 µm, consolidation density = 1.3 g/cm³

Second Si-containing particles: Si-C composite material, content rate of Si = 65% by mass, average particle diameter (D50) = 7 µm, consolidation density = 0.85g/cm³

Graphite particles (first graphite particles and second graphite particles): average particle diameter (D50) = 15 µm, molding pressure = 15MPa when 1 g of graphite particles were uniaxially pressurized and molded into a tablet having a density of 1.7 g/cm³ and a diameter of 20 mm

It should be noted that content rates of Si in the first Si-containing particles and the second Si-containing particles were measured using a commercially available ICP-OEC device. The average particle diameter (D50) of each particle was measured using a commercially available laser diffraction and scattering type particle size distribution analyzer. The consolidation densities of the first Si-containing particles and the second Si-containing particles were measured by the following method.

As a powder measurement sample, 1 g of the first Si-containing particles or the second Si-containing particles were weighed out, and set in a probe (20 mm in diameter) of an automatic powder resistance measurement system "MCP-PD600" (manufactured by Nittoseiko Analytech Co., Ltd.). Load and displacement when a pressure was uniaxially applied were measured using this automatic powder resistance measurement system at 25°C. Based on this, the bulk density of the molded body at a pressure of 60 MPa was obtained, and this was defined as the consolidation density. Furthermore, 1 g of graphite particles was measured as a powder measurement sample and set in a probe (20 mm in diameter) of an automatic powder resistance measurement system "MCP-PD 600" (manufactured by Nittoseiko Analytech Co., Ltd.). Load and displacement when pressure was uniaxially applied were measured using this automatic powder resistance measurement system at 25°C. Based on this, the molding pressure when the density of the molded body was 1.7 g/cm³ was obtained.

As a conductive material, single-walled carbon nanotubes (SWCNT) were prepared. The SWCNT were prepared in a form of dispersion. As a binder, carboxymethyl cellulose (CMC), polyacrylic acid (PAA), and styrene-butadiene rubber (SBR) were provided.

An upper layer formation paste containing graphite particles, first Si-containing particles, SWCNT, CMC, PAA, and SBR at a mass ratio of 60:40:0.1:1:1:1.5 was prepared in the following procedure. Furthermore, a lower layer formation paste containing graphite particles, second Si-containing particles, SWCNT, CMC, PAA, and SBR at a mass ratio of 60:40:0.1:1:1:1.5 was prepared by the following procedure.

The graphite particles, the first Si-containing particles, CMC, and PAA were dryblended using a planetary mixer. The obtained dry mixture, SWCNT dispersion, and a dispersion medium were kneaded using the planetary mixer. Furthermore, SBR and additional dispersion medium were fed into the planetary mixer, and diluted and mixed to obtain an upper layer formation paste.

The graphite particles, the second Si-containing particles, CMC, and PAA were dryblended using a planetary mixer. The obtained dry mixture, SWCNT dispersion, and a dispersion medium were kneaded using the planetary mixer. Furthermore, SBR and additional dispersion medium were fed into the planetary mixer, and diluted and mixed to obtain a lower layer formation paste.

The produced lower layer formation paste was applied onto a surface of copper foil with a thickness of 10 µm and dried, thereby forming a lower layer of the negative electrode active material layer. Furthermore, the produced upper layer formation paste was applied to the lower layer, and dried to form an upper layer. Thus, a multi-layer structured negative electrode active material layer was formed. The negative electrode active material layer was roll-pressed, and then the resulting sheet was processed into a predetermined dimension, thereby obtaining a negative electrode sheet.

### [Example 2]

A negative electrode sheet of Example 2 was obtained in the same manner as in Example 1 except that particles of a Si-C composite material having a consolidation density of 1.0 g/cm³ and a content rate of Si of 51% by mass were used as the first Si-containing particles.

### [Example 3]

A negative electrode sheet of Example 3 was obtained in the same manner as in Example 1 except that the ratio (T2/T1) of a thickness of the upper layer (T2) to a thickness of the lower layer (T1) was changed to 10/90.

### [Example 4]

A negative electrode sheet of Example 4 was obtained in the same manner as in Example 1 except that the ratio (T2/T1) of a thickness of the upper layer (T2) to a thickness of the lower layer (T1) was changed to 90/10.

### [Example 5]

A negative electrode sheet of Example 5 was obtained in the same manner as in Example 1 except that the ratio (T2/T1) of a thickness of the upper layer (T2) to a thickness of the lower layer (T1) was changed to 20/80.

### [Example 6]

A negative electrode sheet of Example 6 was obtained in the same manner as in Example 1 except that the ratio (T2/T1) of a thickness of the upper layer (T2) to a thickness of the lower layer (T1) was changed to 80/20.

### [Example 7]

A negative electrode sheet of Example 7 was obtained in the same manner as in Example 1 except that particles of a Si-C composite material having a consolidation density of 1.2 g/cm³ and a content rate of Si of 40% by mass were used as the first Si-containing particles, and particles of a Si-C composite material having a consolidation density of 0.8 g/cm³ and a content rate of Si of 64% by mass were used as the second Si-containing particles.

### [Example 8]

A negative electrode sheet of Example 8 was obtained in the same manner as in Example 1 except that particles of a Si-C composite material having a consolidation density of 0.72 g/cm³ and a content rate of Si of 58% by mass were used as the second Si-containing particles.

### [Comparative Example 1]

The lower layer formation paste and the upper layer formation paste were mixed so that the mass ratio of these solid components was 1:1 to produce a negative electrode active material layer formation paste. This paste was applied to the surface of the copper foil with a thickness of 10 µm and dried, thereby forming a negative electrode active material layer. The negative electrode active material layer was roll-pressed, and then the resulting sheet was processed into a predetermined dimension, thereby obtaining a negative electrode sheet of Comparative Example 1. It should be noted that the thickness of the negative electrode sheet of Comparative Example 1 was the same as that of Example 1.

### [Comparative Example 2]

A negative electrode sheet of Comparative Example 2 was obtained in the same manner as in Example 1 except that a lower layer was formed using the upper layer formation paste and an upper layer was formed using the lower layer formation paste. Therefore, in Comparative Example 2, the first Si-containing particles and the second Si-containing particles are replaced from each other.

### [Comparative Example 3]

The lower layer formation paste was applied to the surface of the copper foil with a thickness of 10 µm and dried, thereby forming a negative electrode active material layer. The negative electrode active material layer was roll-pressed, and then the resulting sheet was processed into a predetermined dimension, thereby obtaining a negative electrode sheet of Comparative Example 3. It should be noted that the thickness of the negative electrode sheet of Comparative Example 3 was the same as that of Example 1.

### <Evaluation of electrode plate expansion rate>

Thicknesses of the negative electrode of each Example and each Comparative Example were measured. This thickness is defined as an initial thickness (T0). By using the negative electrode, an evaluation lithium ion secondary battery was produced as follows.

LiNi_{1/3}Co_{1/3}Mn_{1/3}O₂ (NCM) as positive electrode active material powder, acetylene black (AB) as a conductive material, and polyvinylidene fluoride (PVdF) as a binder were mixed with N-methylpyrrolidone (NMP) at a mass ratio of NCM:AB:PVdF = 100:1:1 to prepare a positive electrode paste. This paste was applied to a surface of an aluminum foil with a thickness of 15 µm and dried, thereby forming a positive electrode active material layer. The positive electrode active material layer was roll pressed, and then, the resulting sheet was processed into a predetermined dimension to obtain a positive electrode sheet.

A porous polyolefin separator was prepared. Leads were respectively attached to the negative electrode sheet and the positive electrode sheet produced mentioned above, and the negative and positive electrode sheets were stacked with a separator interposed therebetween to produce an electrode body. The electrode body, together with a nonaqueous electrolytic solution, was housed in a case made of an aluminum laminated film. As the nonaqueous electrolytic solution, a nonaqueous electrolytic solution obtained by dissolving LiPF₆ as a supporting salt at a concentration of 1.0 mol/L in a mixed solvent including ethylene carbonate (EC), fluoroethylene carbonate (FEC), ethyl methyl carbonate (EMC), and dimethyl carbonate (DMC) at a volume ratio of 15:5:40:40 was used. Thereafter, the case was sealed to obtain an evaluation lithium ion secondary battery.

Next, each evaluation lithium ion secondary battery produced above was placed in an environment at 25°C. Each evaluation lithium ion secondary battery was charged to 4.2 V with a constant current of 0.4 C, and then, charged with a constant voltage until the electric current value became 0.1 C. Then, each evaluation lithium ion secondary battery was discharged to 2.5 V with a constant current of 0.4 C.

The charging and discharging mentioned above was defined as one cycle, and 250 cycles of the charging and discharging were repeated. Each evaluation lithium ion secondary battery was disassembled under an argon atmosphere, the negative electrode was immersed in DMC, washed, and dried. Then, a thickness of the negative electrode was measured, and this thickness was defined as the thickness (Tc) after the charging and discharging cycle. The change rate (%) of the negative electrode thickness before and after the charging and discharging cycle was calculated from (Tc/T0-1) × 100. The results are shown in Table 1.

### [Table 1]

**Table 1**

| | Structure of active material layer | Thickness ratio T2/T1 | Consolidation density (g/cm³) | | Content rate of Si (% by mass) | | Electrode expansion rate (%) |
|---|---|---|---|---|---|---|---|
| | | | First Si-containing particle | Second Si-containing particle | First Si-containing particle | Second Si-containing particle | |
| Example 1 | Two layers | 50/50 | 1.3 | 0.85 | 35 | 65 | 29 |
| Example 2 | Two layers | 50/50 | 1.0 | 0.85 | 51 | 65 | 33 |
| Example 3 | Two layers | 10/90 | 1.3 | 0.85 | 35 | 65 | 41 |
| Example 4 | Two layers | 90/10 | 1.3 | 0.85 | 35 | 65 | 35 |
| Example 5 | Two layers | 20/80 | 1.3 | 0.85 | 35 | 65 | 37 |
| Example 6 | Two layers | 80/20 | 1.3 | 0.85 | 35 | 65 | 34 |
| Example 7 | Two layers | 50/50 | 1.2 | 0.80 | 40 | 64 | 36 |
| Example 8 | Two layers | 50/50 | 1.3 | 0.72 | 35 | 58 | 32 |
| Comparative Example 1 | Single layer | - | 1.3 | 0.85 | 35 | 65 | 54 |
| Comparative Example 2 | Two layers | 50/50 | 0.85 | 1.3 | 65 | 35 | 50 |
| Comparative Example 3 | Single layer | - | - | 0.85 | - | 65 | 61 |

The results of Table 1 show that when in the upper layer of the negative electrode active material layer, in addition to the first graphite particles, the first Si-containing particles having a low content rate of Si and high consolidation density (specifically, consolidation density was 0.9 g/cm³ or more) were used, and in the lower layer of the negative electrode active material layer, in addition to the second graphite particles, the second Si-containing particles having a high content rate of Si and a low consolidation density (specifically, consolidation density was less than 0.9 g/cm³) were used, the electrode plate expansion rate was very small. Therefore, it can be understood that according to the negative electrode of the present disclosure, while the negative electrode containing the Si-containing particles and graphite particles is used, swelling of the negative electrode when the secondary battery is repeatedly charged and discharged is small.

In the above, specific examples of the present disclosure have been described in detail, but they are merely examples, and are not intended to limit the scope of the claims. The techniques described in the claims include various modifications and changes of the above exemplified specific examples.

That is, the negative electrode of the secondary battery, the method for manufacturing the negative electrode, and the secondary battery disclosed herein are the following items [1] to [10].
[1] A negative electrode of a secondary battery, including
   a negative electrode current collector; and
   a negative electrode active material layer supported by the negative electrode current collector, wherein
   the negative electrode active material layer includes a first layer located on a surface layer part side, and a second layer located on a negative electrode current collector side,
   the first layer contains first graphite particles and first Si-containing particles,
   the second layer contains second graphite particles and second Si-containing particles,
   a content rate of Si in the first Si-containing particles is smaller than a content rate of Si in the second Si-containing particles, and
   a consolidation density of the first Si-containing particles is 0.9 g/cm³ or more and a consolidation density of the second Si-containing particles is less than 0.9 g/cm³ when a density of a molded body obtained by uniaxially pressurizing and molding 1 g of particles at 25°C and at 60 MPa into a tablet having a diameter of 20 mm is defined as a consolidation density.
[2] The negative electrode according to the item [1], wherein the consolidation density of the first Si-containing particles is 0.95 g/cm³ or more and 1.8 g/cm³ or less.
[3] The negative electrode according to the item [1] or [2], wherein the consolidation density of the second Si-containing particles is 0.65 g/cm³ or more and 0.85 g/cm³ or less.
[4] The negative electrode according to any one of the items [1] to [3], wherein a ratio of a thickness of the second layer with respect to a thickness of the first layer is 10/90 to 90/10.
[5] The negative electrode according to any one of the items [1] to [4], wherein the first Si-containing particles and the second Si-containing particles are respectively particles of Si-C composite material.
[6] The negative electrode according to any one of the items [1] to [5], wherein a ratio of the content rate of Si in the first Si-containing particles with respect to the content rate of Si in the second Si-containing particles is 0.10 to 0.90.
[7] The negative electrode according to any one of the items [1] to [6], wherein the content rate of Si in the first Si-containing particles is 20% by mass to 55% by mass, and the content rate of Si in the second Si-containing particles is 45% by mass to 80% by mass.
[8] The negative electrode according to any one of the items [1] to [7], wherein a mass percentage of the first Si-containing particles with respect to a total of the first graphite particles and the first Si-containing particles in the first layer is 10% by mass to 60% by mass, and
   a mass percentage of the second Si-containing particles with respect to a total of the second graphite particles and the second Si-containing particles in the second layer is 10% by mass to 60% by mass.
[9] A method for manufacturing a negative electrode of a secondary battery, the method including steps of:
   preparing a second layer formation paste by mixing second graphite particles and second Si-containing particles in a dispersion medium;
   preparing a first layer formation paste by mixing first graphite particles and first Si-containing particles in a dispersion medium;
   forming a second layer by applying the second layer formation paste onto a negative electrode current collector and drying the applied paste;
   forming a first layer by applying the first layer formation paste onto the second layer and drying the applied paste; and
   pressing the formed first layer and second layer; wherein
   a content rate of Si in the first Si-containing particles is smaller than a content rate of Si in the second Si-containing particles,
   a consolidation density of the first Si-containing particles is 0.9 g/cm³ or more and a consolidation density of the second Si-containing particles is less than 0.9 g/cm³ when a density of a molded body obtained by uniaxially pressurizing and molding 1 g of particles at 25°C and at 60 MPa into a tablet having a diameter of 20 mm is defined as a consolidation density.
[10] A secondary battery including a positive electrode, a negative electrode, and an electrolyte,
   wherein the negative electrode is the negative electrode according to any one of the items [1] to [8].

## Claims

1. A negative electrode (60) of a secondary battery (100), comprising:
a negative electrode current collector (62); and
a negative electrode active material layer (64) supported by the negative electrode current collector (62), wherein
the negative electrode active material layer (64) includes a first layer (64a) located on a surface layer part side, and a second layer (64b) located on a negative electrode current collector side,
the first layer (64a) contains first graphite particles (12) and first Si-containing particles (14),
the second layer (64b) contains second graphite particles (16) and second Si-containing particles (18),
a content rate of Si in the first Si-containing particles (14) is smaller than a content rate of Si in the second Si-containing particles (18), and
a consolidation density of the first Si-containing particles (14) is 0.9 g/cm³ or more and a consolidation density of the second Si-containing particles (18) is less than 0.9 g/cm³ when a density of a molded body obtained by uniaxially pressurizing and molding 1 g of particles at 25°C and at 60 MPa into a tablet having a diameter of 20 mm is defined as a consolidation density.

2. The negative electrode (60) according to claim 1, wherein the consolidation density of the first Si-containing particles (14) is 0.95 g/cm³ or more and 1.8 g/cm³ or less.

3. The negative electrode (60) according to claim 1, wherein the consolidation density of the second Si-containing particles (18) is 0.65 g/cm³ or more and 0.85 g/cm³ or less.

4. The negative electrode (60) according to claim 1, wherein a ratio of a thickness of the second layer (64b) with respect to a thickness of the first layer (64a) is 10/90 to 90/10.

5. The negative electrode (60) according to claim 1, wherein the first Si-containing particles (14) and the second Si-containing particles (18) are respectively particles of Si-C composite material.

6. The negative electrode (60) according to claim 1, wherein a ratio of the content rate of Si in the first Si-containing particles (14) with respect to the content rate of Si in the second Si-containing particles (18) is 0.10 to 0.90.

7. The negative electrode (60) according to claim 1, wherein the content rate of Si in the first Si-containing particles (14) is 20% by mass to 55% by mass, and the content rate of Si in the second Si-containing particles (18) is 45% by mass to 80% by mass.

8. The negative electrode (60) according to claim 1, wherein a mass percentage of the first Si-containing particles (14) with respect to a total of the first graphite particles (12) and the first Si-containing particles (14) in the first layer (64a) is 10% by mass to 60% by mass, and
a mass percentage of the second Si-containing particles (18) with respect to a total of the second graphite particles (16) and the second Si-containing particles (18) in the second layer (64b) is 10% by mass to 60% by mass.

9. A method for manufacturing a negative electrode (60) of a secondary battery (100), the method comprising steps of:
preparing a second layer formation paste by mixing second graphite particles (16) and second Si-containing particles (18) in a dispersion medium;
preparing a first layer formation paste by mixing first graphite particles (12) and first Si-containing particles (14) in a dispersion medium;
forming a second layer (64b) by applying the second layer formation paste onto a negative electrode current collector (62) and drying the applied paste;
forming a first layer (64a) by applying the first layer formation paste onto the second layer and drying the applied paste; and
pressing the formed first layer (64a) and second layer (64b); wherein
a content rate of Si in the first Si-containing particles (14) is smaller than a content rate of Si in the second Si-containing particles (18),
a consolidation density of the first Si-containing particles (14) is 0.9 g/cm³ or more and a consolidation density of the second Si-containing particles (18) is less than 0.9 g/cm³ when a density of a molded body obtained by uniaxially pressurizing and molding 1 g of particles at 25°C and at 60 MPa into a tablet having a diameter of 20 mm is defined as a consolidation density.

10. A secondary battery (100) comprising a positive electrode (50), a negative electrode (60), and an electrolyte,
wherein the negative electrode (60) is the negative electrode (60) according to claim 1.
